(19)

Europäisches
Patentamt
European
Patent Office
Office européen
des brevets

(11) **EP 2 527 957 A1**

(12) **EUROPEAN PATENT APPLICATION**

(43) Date of publication:
**28.11.2012 Bulletin 2012/48**

(51) Int Cl.:
***G06F 3/033*** *(2006.01)*

(21) Application number: **12162725.1**

(22) Date of filing: **30.03.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **06.05.2011 KR 20110042774**

(71) Applicant: **Samsung Electronics Co., Ltd.
Suwon-si, Gyeonggi-do, 443-742 (KR)**

(72) Inventors:
• **Taylor, Brandon Thomas
  Seoul (KR)**
• **Lee, Jong-In
  Gyeonggi-do (KR)**

(74) Representative: **Jenkins, Richard Gavin
  Harrison Goddard Foote
  Saviour House
  9 St Saviourgate
  York, YO1 8NQ (GB)**

(54) **Method and apparatus for motion sensing with independent grip direction**

(57)     A motion sensing technique. A method for motion sensing of a motion sensing apparatus include determining a gravity direction, determining an actual motion, and determining a current motion based on the determined gravity direction, the determined actual motion direction, and a previous motion direction.

FIG.1

Printed by Jouve, 75001 PARIS (FR)

**Description**

**TECHNICAL FIELD OF THE INVENTION**

The present disclosure relates to motion sensing. More particularly, the present disclosure relates to a method and apparatus for sensing a user's motion irrespective of a grip direction.

**BACKGROUND OF THE INVENTION**

The conventional motion sensing apparatus has a remote control type button or the like in an upper portion of the apparatus, detects a user's motion by using a sensor, and delivers information on the motion detection to a receiver. Upon receiving the information, the receiver determines the user's motion and operation by using information of the sensor and obtains the determination result.

The conventional input apparatus has a problem in that a user's grip position is fixed. Thus, various changes in a grip shape are not allowed and users are recommended to always have a correct grip. In particular, if the users are children who cannot freely grip the apparatus, there is a decrease in terms of usability and interest.

**SUMMARY OF THE INVENTION**

To address the above-discussed deficiencies of the prior art, it is a primary aspect of the present disclosure is to provide a method and apparatus for motion sensing irrespective of a grip direction.

Another aspect of the present disclosure is to provide a method and apparatus in which a user's motion can be correctly sensed irrespective of an angle or direction in which a user grips a motion sensing apparatus, so that the user can freely grip the apparatus.

In accordance with an aspect of the present disclosure, a method for motion sensing of a motion sensing apparatus is provided. The method includes determining a gravity direction, determining an actual motion, and determining a current motion based on the determined gravity direction, the determined actual motion direction, and a previous motion direction.

In accordance with another aspect of the present disclosure, an apparatus for motion sensing is provided. The apparatus includes a Radio Frequency (RF) modem for communicating with another apparatus, and a motion determination unit for determining a gravity direction, for determining an actual motion, and for determining a current motion based on the determined gravity direction, the determined actual motion direction, and a previous motion direction.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

**BRIEF DESCRIPTION OF THE DRAWINGS**

For a more complete understanding of the present disclosure and its advantages, reference is now made to the following description taken in conjunction with the accompanying drawings, in which like reference numerals represent like parts:

FIG. 1 illustrates a motion sensing apparatus according to an exemplary embodiment of the present disclosure;

FIG. 2 illustrates a mutual motion set for a user's motion according to an exemplary embodiment of the present disclosure;

FIGS. 3A-E illustrate an application motion sensing operation using a motion sensing apparatus according to an exemplary embodiment of the present disclosure;

FIG. 4 illustrates an operation of a motion sensing apparatus according to an exemplary embodiment of the present disclosure; and

FIG. 5 illustrates is a block diagram of a motion sensing apparatus according to an exemplary embodiment of the present disclosure.

## DETAILED DESCRIPTION OF THE INVENTION

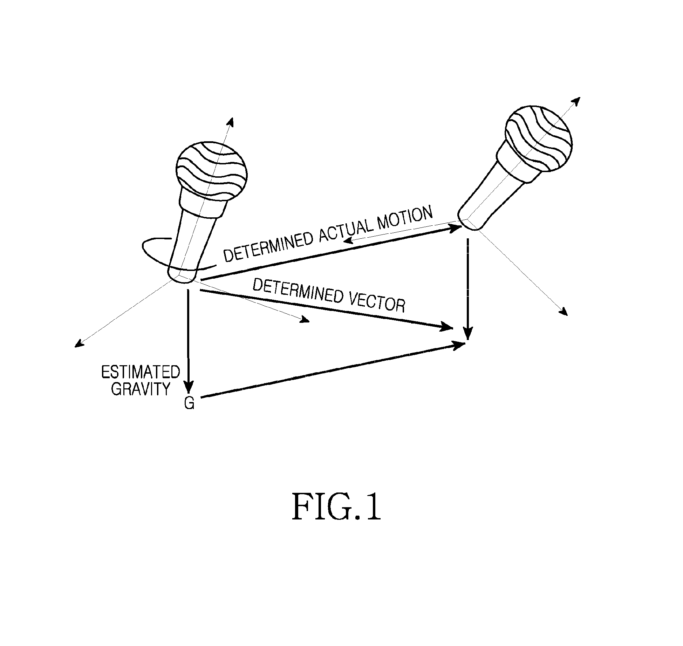

FIGURES 1 through 5, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communication system.

The present disclosure described hereinafter relates to a method and apparatus for motion sensing irrespective of a grip direction.

There are a variety of game machines or consol-based systems based on motion sensing by the use of a motion sensing input apparatus. In a method of controlling contents based on such systems, a motion sensing apparatus is used as a tool for delivering input information by considering a user's behavior without alteration. Various approaches and developments are carried out so that the apparatus can be more widely used in a more realistic manner. Since axes x, y, and z used in motion sensing have fixed directions in the conventional apparatus, correct motion sensing may only be possible when a motion is made while a user grips the apparatus always in the fixed directions.

FIG. 1 illustrates a motion sensing apparatus according to an exemplary embodiment of the present disclosure.

Referring to FIG. 1, the apparatus of the present disclosure can correctly sense a direction by correctly sensing a motion irrespective of an angle in which the apparatus is gripped. Therefore, the apparatus can be freely gripped without distinction of up, down, left, and right directions. As a result, the apparatus can be designed without restrictions.

If an acceleration can be determined at each of the axes x, y, and z as shown in FIG. 1, a vector value with respect to a gravity direction can be determined when there is no motion as usual, a motion vector value is determined when there is an actual motion, and an actual motion direction vector value (i.e., a determined vector value) can be obtained by using the two determined vector values. In the present disclosure, a gyro sensor is provided to obtain a rotation direction.

According to the present disclosure, when a user moves the motion sensing apparatus, the motion sensing apparatus can contiguously update a reference gravity direction so as to update a gravity direction even if an angle of the motion sensing apparatus changes. Further, by adding the aforementioned two vectors based on the updated gravity direction, the motion sensing apparatus can determine a motion vector and can sense a user's motion. Further, the present disclosure can control combination of sensors and sensitivity of the sensors on a real time basis, and thus can control and compensate for a sensing range in accordance with a motion size on a real time basis.

That is, by continuously sensing the user's motion and updating the vector value of the gravity direction, motion sensing is possible in the present disclosure irrespective of a positional change of the apparatus while the user continuously moves.

Regarding an area in which a value of the sensor shows a significant change, the conventional apparatus determines the area as a motion sensing area and thus processes corresponding data. However, regarding an area in which there is only a directional change or a small motional change, the conventional apparatus cannot determine the motion. Further, in the middle of motion, there is no gravity determination process for obtaining the reference gravity direction. That is, if there is a change or twist in a grip direction of the apparatus in the middle of motion, the conventional apparatus cannot sense the resultant direction.

On the other hand, the apparatus of the present disclosure can sense continuous motions by confirming a data input at every sample rate, while continuously updating a reference direction (i.e., a gravity direction). Accordingly, even if the direction of the apparatus changes during the continuous motions, the apparatus of the present disclosure can detect the gravity direction of the apparatus whose direction changes, and can sense a motion, for example, in a left or right direction based on the detected gravity direction. In addition, the apparatus of the present disclosure can sense continuous motions by using a future motion prediction value based on a previous motion direction value and by using a correction based on a determined value. The motion sensing apparatus of the present disclosure can sense a user's motion by using Equation (1) below.

$$G_P = F_P(G_{t-1}) \qquad\qquad ......(1)$$

In Equation (1), $G_P$ is a motion prediction vector at a current time, Fp is a prediction function, and $G_{t-1}$ is a motion vector at a previous time. Fp is not restricted by a specific algorithm. A rotation angle determined by a gyro sensor can be used when determining the motion prediction vector and the motion vector at the previous time. Equation (1) above shows that a current motion prediction vector is predicted based on a previous motion (including a previous rotation).

$$G_P = F_E(G_P, measurement) \qquad\qquad ......(2)$$

In Equation (2), $G_t$ is a motion vector at a current time, $F_E$ is a motion determination function, $G_P$ is motion prediction vector at a current time, and 'measurement' is a determination value obtained by determining a motion. $F_E$ is not restricted by a specific algorithm. The determination value is determined by considering an actual motion vector based on a gravity value updated periodically as illustrated in FIG. 1. The determination value can include a rotation angle. Equation (2) above shows that the motion vector at the current time is based on a current determination value and a current prediction motion vector based on a motion vector at a previous time.

The apparatus of the present disclosure can be controlled to fit various sensors and to an input value range of the sensors. A sensor determination value can be saturated when determined sensitivity of the sensor is small. If a great motion is sensed under this condition, the sensitivity of the sensor can be increased (e.g.., sensitivity of an accelerometer is increased) so that a sensor value is not saturated. In this example, since the sensor value may not be input reliably when a motion range is small, it can be reported that the sensor value currently being input to an application program of a higher layer needs to be corrected, so that the value can be corrected to a value determined by a gyroscope.

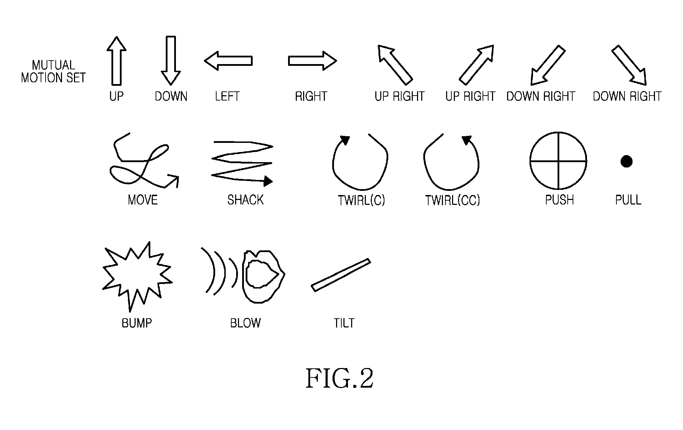

FIG. 2 illustrates a mutual motion set for a user's motion according to an exemplary embodiment of the present disclosure.

Referring to FIG. 2, according to the order illustrated, when a user raises a motion sensing apparatus of the present disclosure, an up motion is sensed, and when the user lowers the apparatus, a down motion is sensed. This is an example where up and down motions are determined as a result of analyzing data acquired from a sensor by the motion sensing apparatus. The same is also applicable to the remaining motion sensing results.

When the user moves the motion sensing apparatus of the present disclosure to the left, a left motion is sensed, and when the user moves the apparatus to the right, a right motion is sensed.

When the user moves the motion sensing apparatus of the present disclosure to the up-left, an up-left motion is sensed, and when the user moves the apparatus to the up-right, an up-right motion is sensed.

When the user moves the motion sensing apparatus of the present disclosure to the down-left, a down-left motion is sensed, and when the user moves the apparatus to the down-right, a down-right motion is sensed.

When the user moves the motion sensing apparatus of the present disclosure in a random direction, a random direction motion is sensed, and when the user shakes the apparatus, a shake motion is sensed.

When the user rotates the motion sensing apparatus of the present disclosure in a clockwise direction or in a counter-clockwise direction, a corresponding motion is sensed in the motion sensing apparatus.

When the user pushes or pulls the motion sensing apparatus of the present disclosure, a corresponding motion is sensed in the motion sensing apparatus.

When the user bumps or blows the motion sensing apparatus of the present disclosure, a corresponding motion is sensed in the motion sensing apparatus. The motion sensing apparatus of the present disclosure includes a microphone to allow the user to blow a breath to the microphone.

When the user tilts the motion sensing apparatus of the present disclosure, a corresponding motion (i.e., a tilt) is sensed in the motion sensing apparatus.

As such, the motion sensing apparatus of the present disclosure can sense the aforementioned motions.

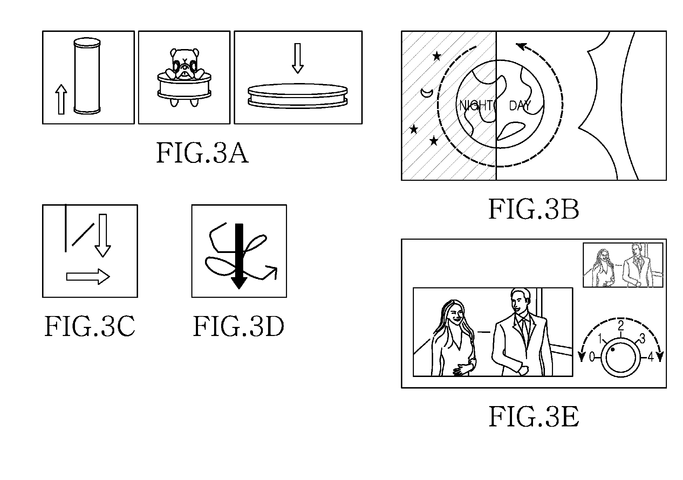

FIGS. 3A-E illustrate an application motion sensing operation using a motion sensing apparatus according to an exemplary embodiment of the present disclosure.

Referring to FIG. 3A, an operation for moving or crushing a can is shown in FIG. 3A. A user can move or crush the can on a screen by moving up/down, pushing, pulling, rotating, or blowing the motion sensing apparatus.

Referring to FIG. 3B, the rotation and revolution of the Earth are shown. A user can rotate the Earth on a screen by rotating the motion sensing apparatus.

Referring to FIG. 3C, a line drawing operation is shown. A user can draw a line on a screen according to a user's motion by moving up/down/left/right the motion sensing apparatus.

Referring to FIG. 3D, a coloring operation is shown. A user can color an object on a screen according to a user's motion by shaking the motion sensing apparatus.

Referring to FIG. 3E, a zoom-in operation is shown. A user can zoom in or out an object on a screen according to a rotation direction by rotating the motion sensing apparatus.

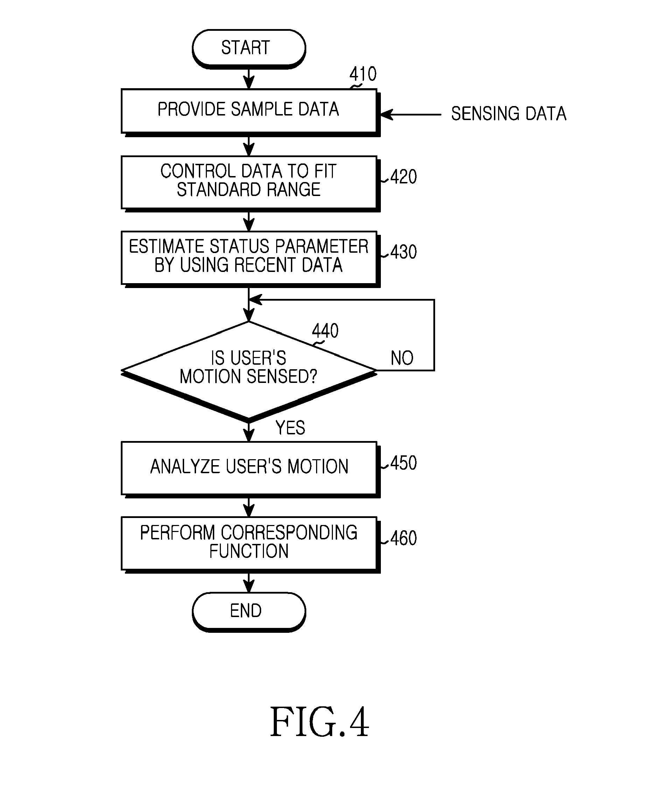

FIG. 4 illustrates an operation of a motion sensing apparatus according to an exemplary embodiment of the present disclosure.

Referring to FIG. 4, when sample data (i.e., a determination value) is provided from a sensor in step 410, the motion sensing apparatus of the present disclosure performs a data control process so that the sample data is in a reference range in step 420.

In step 430, the motion sensing apparatus estimates a motion sensing parameter by using the most recently input sample data. Herein, estimating of a status parameter implies that a gravity direction is updated by using the sample data which is input from the sensor. When a user moves while gripping the motion sensing apparatus, a previously determined gravity direction becomes different from a current gravity direction.

That is, the motion sensing apparatus performs a process of updating the previously determined gravity direction to the current gravity direction. Such a process can be performed independently from a user's motion determination, and can be periodically executed even if there is no user motion.

Upon sensing a user's motion from a sensor determination value in step 440, that is, upon sensing the user's motion by analyzing a determination value of the sensor, the motion sensing apparatus analyzes a motion type in step 450. The motion sensing apparatus can determine a current motion by using the determination value and information on the previous motion according to Equation (1) and Equation (2) above. Examples of the motion type include an up motion, a down motion, etc., as shown in FIG. 2.

In step 460, the motion sensing apparatus performs a corresponding operation according to an analysis result of the motion type. For example, if the analysis result of the motion type indicates that the motion sensing apparatus moves upward, information indicating that the motion sensing apparatus moves upward is output.

An application program receives the motion analysis result, and uses the motion analysis result as input data for an application program operation. That is, if the motion analysis result indicates that the motion sensing apparatus moves upward, the application program can move an object on a screen upward.

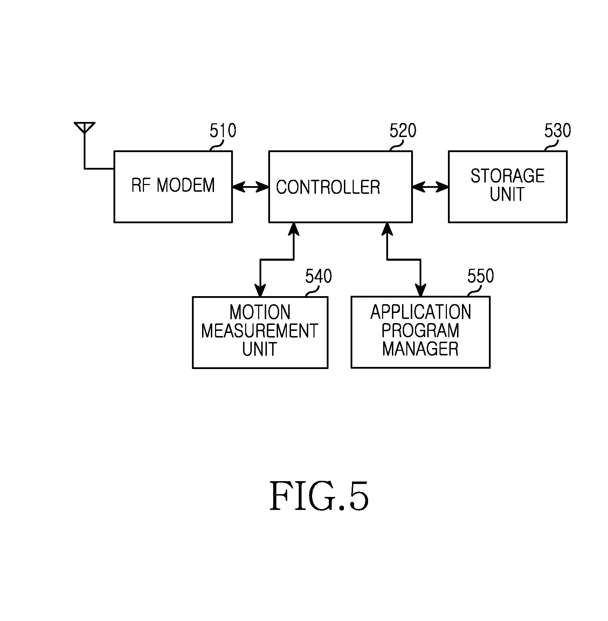

FIG. 5 illustrates a motion sensing apparatus according to an exemplary embodiment of the present disclosure.

Referring to FIG. 5, the motion sensing apparatus includes a Radio Frequency (RF) modem 510, a controller 520, a storage unit 530, a motion determination unit 540, and an application program manager 550. The controller 520 can control the motion determination unit 540 and the application program manager 550.

The RF modem 510 is a module for communicating with a difference device, and consists of a radio processor and a baseband processor. The radio processor converts a signal received through an antenna into a baseband signal and provides the baseband signal to the baseband processor. Further, the radio processor converts a baseband signal provided from the baseband processor into a radio signal that can be transmitted on an actual radio path, and transmits the radio signal through the antenna. Any device can be used as the different device as long as it can receive an output of the motion sensing apparatus.

The controller 520 provides overall control to the motion sensing apparatus. In particular, according to the present disclosure, controller 520 controls the motion determination unit 540 and the application program manager 550.

The storage unit 530 stores a program for controlling an overall operation of the motion sensing apparatus and temporary data that is generated while executing the program.

Although not shown, the motion sensing apparatus can include a microphone.

The motion determination unit 540 is an element for determining a motion direction of the motion sensing apparatus. The motion determination unit 540 can determine a current gravity direction (i.e., a gravity direction vector) based on data determined by an accelerator and a gyro sensor, and can provide the determined gravity direction to the controller 520.

The motion determination unit 540 can include the accelerator and the gyro sensor, or can analyze a determination value determined by the accelerator and gyro sensor provided outside the motion determination unit 540 to determine a current gravity direction (i.e., a gravity direction vector) and when a motion occurs, i.e., when there is an actual motion, to determine a motion vector value, and then to determine an actual motion direction vector by using the two determined vector values.

The motion determination unit 540 can predict a current motion direction based on a previous motion and a determination value (i.e., a motion direction vector) as disclosed in Equation (1) and Equation (2) above.

When sample data (i.e., a determination value) is provided from a sensor, the motion determination unit 540 performs a data control process so that the sample data is in a standard range.

The motion determination unit 540 estimates a motion sensing parameter by using the most recently input sample data. Herein, estimating of a status parameter implies that a gravity direction is updated by using sample data which is input from the sensor. When the user moves while gripping the motion sensing apparatus, the previously determined gravity direction becomes different from the current gravity direction.

That is, the motion determination unit 540 performs a process of updating the previously determined gravity direction to the current gravity direction. Such a process can be performed independently from a user's motion determination or can be periodically performed even if there is no user's motion.

Thereafter, upon sensing an event for the user's motion from a sensor determination value, that is, upon sensing the user's motion by analyzing the determination value of the sensor, the motion determination unit 540 analyzes a motion type.

The motion determination unit 540 can determine information on a previous motion by using Equation (1) and Equation (2) above and can determine a current motion by using the determination value. Examples of the motion type include an up motion, a down motion, etc., as shown in FIG. 2.

Thereafter, the motion determination unit 540 performs a corresponding operation according to an analysis result of motion type. For example, if the analysis result of the motion type indicates that the motion sensing apparatus moves upward, information indicating that the motion sensing apparatus moves upward is output.

A rotation angle and actual motion direction of the motion sensing apparatus are provided from the controller 520 to the application program manager 550. The application program manager 550 utilizes the provided information as data for operating an application program. For example, if the value provided by the motion determination unit 540 indicates an up motion, an object on a screen moves up.

According to exemplary embodiments of the present disclosure, a user's motion can be consistently sensed irrespective of an angle or direction in which a user grips a motion sensing apparatus. Therefore, the user can freely grip the apparatus, which results in an increase in usability. As a result, there is an advantage in that the motion sensing apparatus can be designed in various forms without restrictions.

Although the present disclosure has been described with an exemplary embodiment, various changes and modifications may be suggested to one skilled in the art. It is intended that the present disclosure encompass such changes and modifications as fall within the scope of the appended claims.

**Claims**

1. A method for motion sensing of a motion sensing apparatus, the method comprising:

   determining a gravity direction;
   determining an actual motion; and
   determining a current motion based on the determined gravity direction, the determined actual motion direction, and a previous motion direction.

2. The method of claim 1 further comprising:

   performing an operation based on the current motion.

3. The method of claim 1 further comprising:

   updating the gravity direction.

4. The method of claim 1 further comprising:

   before determining the gravity direction, performing a control process to allow a determination value of a sensor to be in a reference range.

5. The method of claim 4, wherein the sensor includes at least one of an accelerator sensor and a gyro sensor.

6. The method of claim 1, wherein determining the current motion based on the determined gravity direction, the determined actual motion direction, and the previous motion direction comprises:

   using equations of:

$$G_P = F_P(G_{t-1}),$$

   where $G_P$ is a motion prediction vector at a current time, Fp is a prediction function, and $G_{t-1}$ is a motion vector at a previous time; and

$$G_P = F_E(G_P, measurement),$$

where $G_t$ is a motion vector at a current time, $F_E$ is a motion determination function, $G_P$ is motion prediction vector at a current time, and 'measurement' is a determination value obtained by determining a motion.

7. The method of claim 1, wherein determining the current motion comprises:

calculating the current motion based on:

$$G_P = \mathrm{F_P}(G_{t-1})$$,

where $G_P$ is a motion prediction vector at a current time, $F_p$ is a prediction function, and $G_{t-1}$ is a motion vector at a previous time

8. An apparatus for motion sensing, the apparatus comprising:

a Radio Frequency (RF) modem configured to communicate with another apparatus; and
a motion determination unit configured to:

determine a gravity direction,
determine an actual motion, and
determining a current motion based on the determined gravity direction, the determined actual motion direction, and a previous motion direction.

9. The apparatus of claim 8 further comprising:

an application program manager configured to perform an operation based on the current motion.

10. The apparatus of claim 8, wherein the motion determination unit is further configured to update the gravity direction.

11. The apparatus of claim 8, wherein before determining the gravity direction, the motion determination unit is further configured to perform a control process to allow a determination value of a sensor to be in a reference range.

12. The apparatus of claim 11, wherein the sensor includes at least one of an accelerator sensor and a gyro sensor.

13. The apparatus of claim 8, wherein to determine the current motion based on the determined gravity direction, the determined actual motion direction, and the previous motion direction, the motion determination unit is further configured to use equations of:

$$G_P = \mathrm{F_P}(G_{t-1}),$$

where $G_P$ is a motion prediction vector at a current time, $F_p$ is a prediction function, and $G_{t-1}$ is a motion vector at a previous time; and

$$G_P = \mathrm{F_E}(G_P, measurement),$$

where $G_t$ is a motion vector at a current time, $F_E$ is a motion determination function, $G_p$ is motion prediction vector at a current time, and 'measurement' is a determination value obtained by determining a motion.

14. The apparatus of claim 7, wherein to determine the current motion, the motion determination unit is further configured to
calculate the current motion based on:

$$G_P = \mathrm{F_P}(G_{t-1})$$,

where $G_P$ is a motion prediction vector at a current time, $F_p$ is a prediction function, and $G_{t-1}$ is a motion vector at a previous time.

$$G_P = \mathrm{F_P}(G_{t-1})$$,

DETERMINED ACTUAL MOTION

DETERMINED VECTOR

ESTIMATED
GRAVITY
G

FIG.1

FIG.2

FIG.3A

FIG.3B

FIG.3C

FIG.3D

FIG.3E

START

PROVIDE SAMPLE DATA ⟵ 410 ⟵ SENSING DATA

CONTROL DATA TO FIT
STANDARD RANGE ~420

ESTIMATE STATUS PARAMETER
BY USING RECENT DATA ~430

IS USER'S
MOTION SENSED? 440 — NO

YES

ANALYZE USER'S MOTION ~450

PERFORM CORRESPONDING
FUNCTION ~460

END

# FIG.4

FIG.5

Europäisches
Patentamt

European
Patent Office

Office européen
des brevets

## EUROPEAN SEARCH REPORT

Application Number

EP 12 16 2725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/156476 A2 (MOVEA S A [FR]; MATHEWS MICHAEL [US]; MASON WALTER [US]) 30 December 2009 (2009-12-30) * the whole document * ----- | 1-14 | INV. G06F3/033 |
| X | US 2010/042358 A1 (MOUSSAVI FARSHID [US]) 18 February 2010 (2010-02-18) * paragraphs [0004] - [0008], [0033] - [0059] * ----- | 1-14 | |
| X | US 2009/115724 A1 (YAMAMOTO KAZUYUKI [JP]) 7 May 2009 (2009-05-07) * paragraphs [0011] - [0035] * ----- | 1-14 | |
| X | US 2010/136957 A1 (HORODEZKY SAMUEL JACOB [US] ET AL) 3 June 2010 (2010-06-03) * paragraphs [0035] - [0037] * ----- | 1-14 | |
|  |  |  | TECHNICAL FIELDS SEARCHED (IPC) |
|  |  |  | G06F |

The present search report has been drawn up for all claims

| Place of search | Date of completion of the search | Examiner |
|---|---|---|
| The Hague | 17 October 2012 | Davenport, Kevin |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

& : member of the same patent family, corresponding
      document

EPO FORM 1503 03.82 (P04C01)

## ANNEX TO THE EUROPEAN SEARCH REPORT
## ON EUROPEAN PATENT APPLICATION NO.

EP 12 16 2725

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2012

| Patent document cited in search report | | Publication date | Patent family member(s) | | Publication date |
|---|---|---|---|---|---|
| WO 2009156476 | A2 | 30-12-2009 | CN | 102165395 A | 24-08-2011 |
| | | | EP | 2304528 A2 | 06-04-2011 |
| | | | JP | 2012502331 A | 26-01-2012 |
| | | | KR | 20110031479 A | 28-03-2011 |
| | | | US | 2009326857 A1 | 31-12-2009 |
| | | | US | 2012194426 A1 | 02-08-2012 |
| | | | WO | 2009156476 A2 | 30-12-2009 |
| US 2010042358 | A1 | 18-02-2010 | US | 2010042358 A1 | 18-02-2010 |
| | | | US | 2012046902 A1 | 23-02-2012 |
| US 2009115724 | A1 | 07-05-2009 | JP | 2009301531 A | 24-12-2009 |
| | | | US | 2009115724 A1 | 07-05-2009 |
| US 2010136957 | A1 | 03-06-2010 | CN | 102227707 A | 26-10-2011 |
| | | | EP | 2370886 A1 | 05-10-2011 |
| | | | JP | 2012510690 A | 10-05-2012 |
| | | | KR | 20110091571 A | 11-08-2011 |
| | | | TW | 201101105 A | 01-01-2011 |
| | | | US | 2010136957 A1 | 03-06-2010 |
| | | | WO | 2010065664 A1 | 10-06-2010 |

EPO FORM P0459

For more details about this annex : see Official Journal of the European Patent Office, No. 12/82